# EUROPÄISCHE PATENTANMELDUNG

(11) **EP 4 417 408 A1**
(43) Veröffentlichungstag der Anmeldung: **21.08.2024**
(21) Anmeldenummer: 23157333.8
(22) Anmeldetag: 17.02.2023
(51) Int. Cl.: B32B 1/08, B32B 15/08, B32B 15/14, B32B 15/20, F16L 55/165

(54) **WASSERSTOFF-LINER**

(71) Anmelder: SAERTEX multiCom GmbH, 48369 Saerbeck (DE)
(72) Erfinder: Füchtjohann, Nils, 48268 Greven (DE)
(74) Vertreter: Michalski Hüttermann & Partner Patentanwälte mbB

(57) **Zusammenfassung**

Die Erfindung betrifft ein Verfahren zum Sanieren von Wasserstoffleitungen oder zur Umrüstung einer Leitung für den Transport von Wasserstoff und die Verwendung eines Liners zur Sanierung von Wasserstoffleitungen oder für die Umrüstung einer Leitung für den Transport von Wasserstoff.

## Beschreibung

Die Erfindung betrifft ein Verfahren zum Sanieren von Wasserstoffleitungen oder zur Umrüstung einer Leitung für den Transport von Wasserstoff und die Verwendung eines Liners zur Sanierung von Wasserstoffleitungen oder für die Umrüstung einer Leitung für den Transport von Wasserstoff.

Bislang war es schwierig, Wasserstoffleitungen grabenlos zu sanieren. Es gab zwar bereits Technologien, um auch längere Wasserstoffleitungen zu konstruieren. Bislang mussten diese Wasserstoffleitungen meistens zur Reparatur oder für einen Ersatz ausgegraben werden. Anders als Abwässer oder Frischwasser sorgt das Gas Wasserstoff für ganz besondere Anforderungen an die Dichtheit der Leitungen, da bei Austritt von Wasserstoff aus den Leitungen in Verbindung mit dem Sauerstoff aus der Atmosphäre Knallgas entsteht und es zu Verpuffungen und Explosionen kommen kann. Es gab daher bislang das Vorurteil, dass Liner und insbesondere CIPP-Produkte und Einzugsliner, die eigentlich für die Sanierung von Abwasser- oder Frischwasserkanälen bestimmt sind, für die Sanierung von Wasserstoffleitungen nicht geeignet sind.

Die Aufgabe der vorliegenden Erfindung besteht daher darin eine Technologie bereitzustellen, mit der Wasserstoffleitungen wie beispielsweise lange Wasserstoffrohrleitungen grabenlos beispielsweise mit Baugruben in größeren Abständen saniert werden können.

Diese Aufgabe wird in einer ersten Ausführungsform durch die Verwendung eines Liners zur Sanierung einer Wasserstoffleitung oder zur Umrüstung einer Leitung (wie beispielsweise Leitungen für Flüssigkeiten oder Gase wie Wasser oder CO₂) für den Transport von Wasserstoff gelöst, wobei der Liner wenigstens eine Faserschicht umfasst, die mit einem Harzsystem getränkt ist.

In einer weiteren Ausführungsform wird die der Erfindung zu Grunde liegende Aufgabe durch ein Verfahren zum Sanieren von Wasserstoffleitungen oder Umrüsten von Leitungen (wie beispielsweise Leitungen für Flüssigkeiten oder Gase wie Wasser oder CO₂) für den Transport von Wasserstoff gelöst, das dadurch gekennzeichnet ist, dass man einen Liner in eine Leitung (beispielsweise die Wasserstoffleitung oder die umzurüstende Leitung) einbringt und dann aushärtet, wobei der Liner wenigstens eine Faserschicht umfasst, die mit einem Harzsystem getränkt ist.

Dies hat den Fachmann besonders überrascht, da sogar Stahlleitungen bisher nicht geeignet erschienen, als Wasserstoffleitungen dauerhaft eingesetzt zu werden. Die erfindungsgemäß erhaltenen Leitungen können die Diffusion von Wasserstoff erstmals dauerhaft unterbinden.

Die folgenden bevorzugten Ausführungsformen betreffen sowohl die Verwendung als auch das Verfahren, sofern nicht explizit das Verfahren oder die Verwendung genannt sind.

Eine Wasserstoffleitung im Sinne der Erfindung ist beispielsweise eine Leitung, durch die ein Gas oder eine Gasmischung geleitet wird, die wenigstens 50 Vol.%, besonders bevorzugt wenigstens 60 Vol.%, weiter bevorzugt wenigstens 90 Vol.% und ganz besonders 100 Vol.% gasförmigen Wasserstoff enthält. Eine Wasserstoffleitung im Sinne der Erfindung ist beispielsweise ein Rohr und insbesondere eine Rohrleitung (Pipeline).

Vorzugsweise wird der Liner zur Sanierung von Energieträgerleitungen eingesetzt, in denen Wasserstoff transportiert wird oder transportiert werden soll. Dafür können beispielsweise auch Leitungen für andere Flüssigkeiten und Gase wie beispielsweise Wasser oder CO₂ mit dem Liner umgerüstet werden. Energieträgerleitungen bringen besondere Herausforderungen mit sich, da sie oft unter sehr hohem Druck betrieben werden. Vorzugsweise wird der Liner zur Sanierung von Wasserstoffrohrleitungen (insbesondere mit einer Länge von wenigstens 2 km bis zu 10000 km) eingesetzt. Dazu können in größeren Abständen wie beispielsweise in einem Bereich von 50 bis 500 m Baugruben ausgehoben werden. Gerade längere Wasserstoffrohrleitungen können grabenlos mit dem Liner viel leichter saniert werden. Der Durchmesser der Wasserstoffleitung liegt vorzugsweise in einem Bereich von 80 bis 3000 mm. Vorzugsweise wird der Liner zur Sanierung von Wasserstoffrohrleitungen aus Stahl oder auch zur Umrüstung von anderen existierenden Leitungen (beispielsweise Leitungen für Wasser oder CO₂) für den Transport von Wasserstoff eingesetzt. Vorzugsweise liegt die Wanddicke der zu sanierenden Wasserstoffleitung in einem Bereich von 2 bis 50 mm. Wird eine existierende Leitung für Gas oder eine Flüssigkeit für den Transport mit Wasserstoff umgerüstet, so kann die Wanddicke auch in einem Bereich von 2 bis 500 mm liegen. Der Liner wird vorzugsweise in Wasserstoffleitungen zur Sanierung oder in anderen Leitungen, die für den Transport von Wasserstoff mit dem Liner umgerüstet werden, verwendet, die nach der Sanierung oder Umrüstung mit einem Druck von mehr als 1 bar und insbesondere bevorzugt wenigstens 2 bar betrieben werden. Der Druck kann vorzugsweise in einem Bereich von 1,01 bis 120 bar liegen. Der Liner wird vorzugsweise in Wasserstoffleitungen zur Sanierung oder in anderen Leitungen, die für den Transport von Wasserstoff mit dem Liner umgerüstet werden, verwendet, die nach der Sanierung oder Umrüstung mit einem Betriebsdruck (Differenz zum Außendruck) von mehr als 20 mbar betrieben werden. Der Betriebsdruck kann vorzugsweise in einem Bereich von 1,002 bis 120 bar liegen.

Liner im Sinne der Erfindung ist beispielsweise ein Erzeugnis zur Sanierung von Leitungen und insbesondere bevorzugt kein Erzeugnis zum Abdichten von Wasserstofftanks. Wasserstofftanks haben ganz andere Anforderungen an die Eigenschaften der Wandauskleidungen als Leitungen, da durch die Tanks kein Materialstrom in der Weise hindurchfließt, wie es bei Leitungen der Fall wäre.

"Grabenlos" im Sinne der Erfindung heißt, dass die Leitung nicht vollständig ausgegraben werden muss, sondern weitgehend vergraben bleiben kann. Bei längeren Leitungen kann es durchaus notwendig sein, beispielsweise alle 50 oder 100 Meter eine Baugrube zu graben, um einen Zugang zu der Leitung zu haben.

### Aufbau des Liners

Vorzugsweise ist der Liner schlauchförmig. Der Liner ist vorzugsweise ein Einzugsliner. Der Liner kann beispielsweise ein CIPP (cured-in-place-product) sein.

### Vorzugsweise umfasst der Liner

a. wenigstens eine Faserschicht, die mit einem Harzsystem getränkt ist, und
b. wenigstens eine Wasserstoffbarriereschicht,
wobei die Wasserstoffbarriereschicht geeignet ist, die Diffusion von Wasserstoff durch die Wasserstoffbarriereschicht zu verringern, und wobei die Wasserstoffbarriereschicht wenigstens ein Material ausgewählt aus Polymer, Metall, Oxid, Nitrid, Carbid, Graphen und/oder Mischungen derselben aufweist. Es kann auch der Fall sein, dass bereits die mit dem Harzsystem getränkte Faserschicht die Diffusion von Wasserstoff verringert.

Der Liner beziehungsweise die Faserschicht kann unausgehärtet oder ausgehärtet sein.

Der Liner ist vorzugsweise ein Einzugsliner. Der Liner kann aber auch inversierfähig sein.

Vorzugsweise liegt die Permeabilität durch den Liner bei Raumtemperatur und Normalumgebungsdruck in einem Bereich von 10⁻⁵ bis 10⁻¹¹ mol H₂ (m · s · MPa)⁻¹. Die Permeabilität kann gemessen werden, wie es in dem Artikel World Electr. Veh. J. 2021, 12, 130, beschrieben ist.

Im ausgehärteten Zustand hat die Wanddicke des Liners (also alle Schichten des ausgehärteten Liners zusammen) vorzugsweise eine Dicke in einem Bereich von 2 bis 120 mm. Die Obergrenze kann bevorzugt auch bei 30 mm liegen. Der Durchmesser des ausgehärteten Liners liegt vorzugsweise in einem Bereich von 80 bis 3000 mm. Das Verhältnis von Durchmesser zur Wanddicke des ausgehärteten Liners liegt vorzugsweise in einem Bereich von 25:1 bis 200:1, besonders bevorzugt in einem Bereich von 50:1 bis 150:1.

Im Zusammenhang mit dem obengenannten Inversionsverfahren wird darauf hingewiesen, dass sich der Aufbau des Liners vor der Installation für das Inversionsverfahren und für das Einzugsverfahren selbstverständlich unterscheidet. Die Abfolge der Schichten ist bei einem Liner für das Einzugsverfahren genauso wie die Schichten nach der Installation im Rohr angeordnet. Die Reihenfolge der Schichten vor der Installation bei einem Inversionsliner ist selbstverständlich genau umgekehrt zu der Schichtfolge nach der Installation. Da es sich um denselben Liner handelt, sind beide Varianten von dieser Erfindung umfasst.

Beispielsweise weist die Wasserstoffbarriereschicht keine Längsnaht auf. Eine Längsnaht wäre sehr schwierig so abzudichten, dass Wasserstoff die Längsnaht nicht mehr durchdringen könnte. Die Wasserstoffbarriereschicht kann beispielsweise wenigstens eine Naht beziehungsweise wenigstens einen verklebten Überlappungsbereich haben. Alternativ kann die Wasserstoffbarriereschicht auch nahtlos sein.

Die einzelnen Schichten können eine oder auch mehrere Lagen beziehungsweise Materialbahnen umfassen. Diese Lagen (insbesondere der Wasserstoffbarriereschicht) beziehungsweise Materialbahnen sind beispielsweise vollflächig miteinander verbunden.

Der erfindungsgemäße Liner kann weitere Schichten aufweisen.

Zwischen der Wasserstoffbarriereschicht und der Faserschicht ist vorzugsweise eine Verankerungsschicht angeordnet.

Vorzugsweise sind zumindest die Wasserstoffbarriereschicht und die Verankerungsschicht stoffschlüssig oder kraftschlüssig miteinander verbunden. Dadurch dass zumindest diese Schichten vorzugsweise miteinander stoffschlüssig oder kraftschlüssig verbunden sind, können diese Schichten sich nicht relativ zueinander bewegen. Dadurch wird die Stabilität des gesamten Schichtaufbaus erheblich verbessert. Weiterhin erfährt die vorzugsweise innenliegende Wasserstoffbarriereschicht durch die damit verbundene Verankerungsschicht eine erhebliche Verstärkung, so dass die vorzugsweise innenliegende Wasserstoffbarriereschicht nicht mehr leicht verletzt werden kann.

Die Verankerungsschicht, die vorzugsweise aus einem thermoplastischen Material besteht, weist wiederum vorzugsweise eine Dicke in einem Bereich von 10 bis 5000 µm, insbesondere 30 bis 1000µm, und ganz besonders bevorzugt 40 bis 500 µm auf. Das Flächengewicht der Verankerungsschicht kann vorzugsweise in einem Bereich von 50 bis 250 g/m², ganz besonders bevorzugt in einem Bereich von 100 bis 200 g/m², liegen. Die Verankerungsschicht besteht vorteilhafterweise aus einem Textil wie beispielsweise einem Vlies oder einem Schmelzklebstoff oder einer Kombination dieser Varianten. Ganz besonders bevorzugt enthält (vorzugsweise überwiegend) das Textil wie beispielsweise das Vlies Glas (wie Glasfasern), thermoplastischen Materialien, PAN, Naturfasern (wie beispielsweise Flachs oder Hanf) oder Mischungen derselben. Die thermoplastischen Materialien sind beispielsweise ausgewählt aus Polyurethan, Polyethylen, Polypropylen oder Polyester. Der Schmelzklebstoff enthält beispielsweise Polyamid, Polyethylen, APAO (amorphes Polyolefin), EVAC (Ethylenvinylacetat-Copolymer), TPE-E (Polyester-Elastomer), TPE-U (Polyurethan-Elastomer), TPE-A (Copolyamid-Elastomer) oder Vinylpyrrolidon/Vinylacetat-Copolymer, sowie Mischungen derselben.

Der erfindungsgemäße Liner kann eine Außenschicht aufweisen. Diese ist vorzugsweise auf der Seite des Liners angeordnet, die in der sanierten Wasserstoffleitung der Innenwand der sanierten Wasserstoffleitung zugewandt ist.

Die Außenschicht weist vorzugsweise eine Dicke in einem Bereich von 40 bis 2000 µm, weiter bevorzugt eine Dicke in einem Bereich von 100 bis 1500 µm, ganz besonders bevorzugt eine Dicke in einem Bereich von 150 bis 800 µm auf. Die Außenschicht ist vorteilhafterweise nicht für UV-Strahlung durchlässig, damit das Harz in der Faserschlauchschicht nicht beispielsweise bei der Lagerung oder beim Transport aushärtet. Die Außenschicht kann beispielsweise aus Polymer oder auch aus einem Textil wie beispielsweise einem Polymer mit aufkaschiertem Vlies (wie beispielsweise einer Folie mit aufkaschiertem Vlies) bestehen. Als Material für Polymer und/oder Vlies kommen beispielsweise Polyvinylchlorid, Polyethylen und/oder Polypropylen in Frage. Das Polymer beziehungsweise die Folie kann gewebeverstärkt sein. Ganz besonders bevorzugt enthält (vorzugsweise überwiegend) das Textil wie beispielsweise das Vlies Glas (wie Glasfasern), thermoplastischen Materialien, PAN, Naturfasern (wie beispielsweise Flachs oder Hanf) oder Mischungen derselben. Die Außenschicht kann beispielsweise eine (Schlauch-)Folie aus Polyvinylchlorid mit einer Dicke in einem Bereich von 200 bis 800 µm aufweisen. Zudem kann die Außenschicht auf der Innenseite der Folie aus Polyvinylchlorid ein Vlies aus Polyethylen und/oder Polypropylen aufweisen.

Die Außenschicht kann auch faserverstärkt und insbesondere mit einem Gewebe verstärkt sein. Die Außenschicht kann auch mehrere Lagen aus unterschiedlichen Materialien aufweisen.

Zwischen der Wasserstoffbarriereschicht und der Verankerungsschicht kann beispielsweise noch eine Schicht aus thermoplastischem Polymer wie Polypropylen oder Polyethylen vorgesehen sein. Diese kann beispielsweise extrudiert werden. Vorzugsweise liegt das Molekulargewicht des Materials dieser Schicht unterhalb des Molekulargewichts des Materials der angrenzenden Lage der Wasserstoffbarriereschicht, um ein hohes Maß an Fließfähigkeit und damit an Kraftschlüssigkeit zu ermöglichen. Die Schmelze-Massefließrate (MFR/190/5, Prüftemperatur 190 °C, Masse 5 kg) des Polymers liegt vorzugsweise in einem Bereich von 0,2 bis 20 g/10 min. Die Bestimmung kann gemäß DIN EN ISO 1133 erfolgen. Stoffschlüssig oder kraftschlüssig im Sinne der Erfindung kann vorteilhafterweise bedeuten, dass die jeweiligen Schichten miteinander entweder vollflächig oder teilweise kaschiert, laminiert oder verklebt sind. Falls die Schichten teilweise miteinander verbunden sind, so sind vorzugsweise zumindest 40 % der Fläche der Schichten miteinander verbunden oder alternativ punktuell verbunden. So kann ein Verrutschen der Schichten gegeneinander vollständig vermieden werden. Die Schichten können zusätzlich oder alternativ auch so verbunden werden, dass ein hochfließfähiges thermoplastisches Material bei der Herstellung zwischen die Schichten extrudiert wird.

Die Wasserstoffbarriereschicht ist vorzugsweise auf derjenigen der beiden Außenseiten des Liners angeordnet, die in der sanierten Wasserstoffleitung innen liegt.

### Aufbau der Faserschicht

Die Faserschicht kann eine Dicke in einem Bereich von 2 bis 120 mm haben. Die Obergrenze kann bevorzugt auch bei 30 mm liegen. Die Grammatur der wenigstens einen Faserschicht kann vorzugsweise in einem Bereich von 500 bis 10000 g/m², bevorzugt in einem Bereich von 600 bis 5000 g/m², liegen. Die Faserschicht ist vorzugsweise ein Gelege, ein Geflecht, ein Gewebe, eine Matte, ein Gestrick, ein Vlies, ein Filz, ein Gewirke oder eine Kombination oder ein mehrlagiger Aufbau dieser textilen Flächengebilde. So können die Faserschichten beispielsweise Matten sein. Diese Matten können Schneidroving enthalten. Das Flächengewicht des Schneidrovings in einer Matte liegt vorzugsweise in einem Bereich von 100 bis 3000 g/m². Die Obergrenze kann vorzugsweise auch bei 1000 g/m² liegen. Diese Matten können (auch) Fasern enthalten, die in einem Winkel in einem Bereich von -20 bis +20 ° relativ zur Längsrichtung des Liners ausgerichtet sind. Das Flächengewicht dieser Fasern in der Matte liegt vorzugsweise in einem Bereich von 100 bis 4000 g/m². Die Obergrenze kann vorzugsweise auch bei 500 g/m² liegen. Diese Matten können (auch) Fasern enthalten, die in einem Winkel in einem Bereich von 45 bis 135 ° relativ zur Längsrichtung des Liners ausgerichtet sind. Das Flächengewicht dieser Fasern in der Matte liegt vorzugsweise in einem Bereich von 100 bis 4000 g/m². Die Obergrenze kann vorzugsweise auch bei 1000 g/m² liegen. Das Material der Fasern der Faserschicht ist vorzugsweise ausgewählt aus Flachs, Basalt, Glas, Carbon, Aramid, gelgesponnenem Polyethylen (beispielsweise Dyneema ^{®}), PAN, thermoplastischem Polymer oder Mischungen derselben. Thermoplastische Fasern können beispielsweise aus Polypropylen, Polyethylen oder Polyester sein. Das Material für das Harz des Harzsystems kann ausgewählt sein aus der Gruppe ungesättigter Polyesterharze, Silikatharze, Vinylesterharze, Epoxidharze, oder Mischungen derselben.

Der Liner kann auch mehrere Faserschichten, insbesondere bevorzugt 2 bis 15 Faserschichten enthalten. Das Flächengewicht aller Faserschichten zusammen liegt vorzugsweise in einem Bereich von 1000 bis 100.000 g/m². Die Obergrenze kann bevorzugt auch bei 5000 g/m² liegen.

Die Fasern können aus einem oder mehreren Filamenten bestehen.

Der Filamentdurchmesser (Durchmesser der Filamente) liegt vorzugsweise im Median in einem Bereich von 10 bis 300 µm.

Wenigstens die Faserschicht ist vorteilhafterweise nicht gewickelt. Vorzugsweise ist keine der Schichten gewickelt. Wenigstens die Faserschicht ist vorteilhafterweise einstückig. Einstückig im Sinne der Erfindung heißt beispielsweise, dass eine Faserschicht aus einer und nicht mehreren Matten oder Materialbahnen besteht. Es ist nicht ausgeschlossen, dass der Liner mehrere Faserschichten aufweist.

In der Faserschicht ist das Harz im imprägnierten aber noch nicht ausgehärteten Zustand vorzugsweise nicht oder nur teilweise durchpolymerisiert. In der Zusammensetzung des Harzes sind vorteilhafterweise 0,1 bis 20 Gewichtsanteile eines Eindickmittels (wie beispielsweise Isocyanat, Metallhydroxide, Metalloxide wie beispielsweise Magnesiumoxid oder Mineralstoffe wie beispielsweise Kaolin oder Mischungen derselben) bezogen auf 100 Gewichtsanteile Harz enthalten. Es hat sich herausgestellt, dass hierdurch in der Anwendung bei der Sanierung von Leitungen die Zusammensetzung des Harzes hinreichend eingedickt ist, aber bei der Herstellung flüssig genug ist, um beispielsweise die Verankerungsschicht und die Faserschicht vollständig zu tränken.

Das unausgehärtete Harz enthält vorzugsweise einen Initiator zur Aushärtung mittels Lichts und/oder Wärme. Ist in der Wasserstoffbarriereschicht auch Metall (vorzugsweise in Oxidationsstufe 0, also beispielsweise metallisch) enthalten, so ist im Harz der Faserschicht vorzugsweise ein Initiator für die thermische Aushärtung enthalten.

### Aufbau der Wasserstoffbarriereschicht

Der Liner kann wenigstens eine Gasbarriereschicht und insbesondere bevorzugt wenigstens eine Wasserstoffbarriereschicht aufweisen.

Die Wasserstoffbarriereschicht ist geeignet, die Diffusion von Wasserstoff durch die Wasserstoffbarriereschicht zu verringern, wobei die Wasserstoffbarriereschicht wenigstens ein Material ausgewählt aus Polymer, Metall, Oxid, Nitrid, Carbid und/oder Mischungen derselben aufweist. Vorzugsweise liegt die Permeabilität durch die Wassserstoffbarriereschicht bei Raumtemperatur und Normalumgebungsdruck in einem Bereich von 10⁻⁵ bis 10⁻¹¹ cm³ (STP) cm⁻¹ s⁻¹ bar⁻¹ oder alternativ bevorzugt 10⁻⁵ bis 10⁻¹¹ mol H₂ (m · s · MPa)⁻¹. STP (standard temperature and pressure) steht für eine Temperatur von 273.15 K bei einem Druck von 1 atm. Die Permeabilität kann gemessen werden, wie es in dem Artikel World Electr. Veh. J. 2021, 12, 130, beschrieben ist.

Die Wasserstoffbarriereschicht ist vorzugsweise schlauchförmig. Die Wasserstoffbarriereschicht ist besonders bevorzugt ein Folienschlauch. Auf den Folienschlauch und/oder die Wasserstoffbarriereschicht kann vorzugsweise einseitig oder beidseitig ein Vlies aufkaschiert sein. Das Vlies ist vorzugsweise aus einem thermoplastischen Material (wie beispielsweise Polypropylen oder Polyethylen). Die Dicke des Vlieses kann in einem Bereich von 10 bis 500 µm liegen. Dies hat den Vorteil, dass sich die Wasserstoffbarriereschicht dann beim Aushärten des Liners besonders gut mit benachbarten Schichten wie beispielsweise der Faserschicht verbinden kann.

Das Polymer der Wasserstoffbarriereschicht kann vorzugsweise ausgewählt sein aus der Gruppe Polyamid (PA), Hart-Polyethylen (HDPE, High Density Polyethylene), Weich-Polyethylen (LDPE, Low-density polyethylene), LLDPE, flüssigkristallines Polyesterharz (Liquid Crystal Polyester Resin), Bismaleimid-Harze (z.B. graphitfaserverstärktes Bismaleimid-Harz wie Virgin IM7/977-2/AF-191), Ethylenvinylalkohol-Harz (EVOH, wie beispielsweise EVAL Resin der Firma Kuraray), Fluorelastomer (beispielsweise VITON A), Polytetrafluorethylen (PTFE), Nitril-Butadien-Harz (beispielsweise BUNA N), Ethylen-Propylen-Dien-(Monomer)-Kautschuk (EPDM, wie beispielsweise mit Silica- und/oder Kohlenstoffpartikeln gefülltes EPDM), Acrylnitril-Styrol-Acrylat-Copolymer (ASA), Poly-Chlorotrifluoroethylen (CTFE), Noryl, Parylen, Polybutylenterephthalat (PBT), Polycarbonat (PC), Polyethylenterephtalat (PET), Polyimid (PI), Polypropylen (PP), Polyphenylensulfid (PPS), Polystyrol (PS), Polysulfon (PSU), Polyvinylchlorid (PVC), Polyvinylfluorid (PVF), Santoprene, UPVC (Unplasticized Polyvinyl Chloride), Polyurethan (PU), Silikon und/oder Mischungen derselben. Besonders bevorzugt ist das Polymer ausgewählt aus der Gruppe Polyamid, HDPE, LDPE, LLDPE, MDPE, PPS oder eine Mischung derselben. Die Wasserstoffbarriereschicht kann aus mehreren Lagen bestehen. Sind die Lagen aus unterschiedlichen Materialien, kann zwischen den Lagen vorzugsweise ein Haftvermittler vorgesehen sein.

Das Polymer der Wasserstoffbarriereschicht kann auch 0,1 bis 10 Gew.% Additive enthalten. Ein Additiv kann beispielsweise Graphen sein.

Das Polymer kann auch glasfaserverstärkt sein. Der Gehalt an Glasfasern kann in einem Bereich von 1 bis 20 Gew.% liegen.

Das Metall kann beispielsweise Stahl, Eisen, Aluminium, Mangan, Zink, Eisen, Nickel, Kobalt, Zinn, Wismut, Kupfer, Silber, Palladium, Rhodium, Platin, Gold, Titan, Antimon, Wolfram, Molybdän, Vanadium, Chrom sein und ist vorzugsweise ausgewählt aus Stahl, Kupfer, Aluminium und/oder Eisen. Das Aluminium kann vorzugsweise oxidiert und/oder anodisiert sein. Das Metall kann beispielsweise als Schicht auf eine andere Schicht oder Lage mittels thermischem Spritzen, Metallbeschichtung (metal plating), chemischer Gasphasenabscheidung (CVD) oder physikalischer Gasphasenabscheidung (PVD) aufgetragen werden. Beispielsweise kann das Metall auf eine Polymerschicht (wie eine Polymerfolie) aufgetragen sein (beispielsweise, wie in EP 1 930 363 A2 beschrieben).

Das Oxid kann vorzugsweise ausgewählt sein aus Aluminiumoxid, Chromoxid, Erbiumoxid, Silica und/oder Mischungen derselben.

Das Nitrid kann vorzugsweise ausgewählt sein aus Bornitrid, Titannitrid, Siliziumnitrid und/oder Mischungen derselben.

Das Carbid kann vorzugsweise ausgewählt sein aus Siliziumcarbid, Titancarbid und/oder Mischungen derselben.

Vorzugsweise weist die Wasserstoffbarriereschicht eine Lage aus Metall auf oder besteht aus Metall.

Die Wasserstoffbarriereschicht kann beispielsweise auch eine Lage aus Polymer der vorgenannten bevorzugten Polymere und eine Lage aus Metall (beispielsweise als Folie oder auf die Polymerlage aufgetragen) aufweisen. Diese Lagen können unmittelbar aneinander angrenzen. So kann die Wasserstoffbarriereschicht beispielsweise ein Laminat aus einer Metall- und einer Polymerfolie der vorgenannten bevorzugten Metalle und Polymere aufweisen. Beispielsweise kann die Wasserstoffbarriereschicht eine Verbundfolie aus wenigstens einer Metallfolie und wenigstens einer Polymerfolie aufweisen.

Wenn die Wasserstoffbarriereschicht Metall aufweist, dann kann das Metall als Lage, Folie oder als Schicht in der Wasserstoffbarriereschicht vorhanden sein. Diese Lage, Schicht oder Folie kann beispielsweise eine Dicke in einem Bereich von 0,001 bis 100 µm, besonders bevorzugt 5 bis 90 µm aufweisen. Beispielsweise kann die Wasserstoffbarriereschicht eine Lage, Folie oder als Schicht aus Kupfer mit einer Dicke in einem Bereich von 10 bis 90 µm aufweisen. Die Wasserstoffbarriereschicht kann vorzugsweise eine Lage aus einer Metallfolie aufweisen oder aus der Metallfolie bestehen.

Wenn die Wasserstoffbarriereschicht Polymer aufweist, dann kann das Polymer als Lage, Folie oder als Schicht in der Wasserstoffbarriereschicht vorhanden sein. Diese Lage, Schicht oder Folie kann beispielsweise eine Dicke in einem Bereich von 50 bis 5000 µm, besonders bevorzugt 100 bis 1000 µm aufweisen.

Vorzugsweise handelt es sich bei dem Polymer um ein thermoplastisches Polymer und insbesondere nicht um ein Elastomer. Vorzugsweise ist das Polymer der Wasserstoffbarriereschicht teilkristallin. Der Kristallisationsgrad des Polymers liegt vorzugsweise in einem Bereich von 50 bis 95%. Der Kristallisationsgrad K des Polymers kann aus dem Verhältnis der mittels DSC gemessenen Schmelzenthalpie zu dem Literaturwert für 100 % kristallines Material berechnet werden.

Es können eine oder mehrere Wasserstoffbarriereschichten in dem Liner angeordnet sein. Falls mehrere Wasserstoffbarriereschichten in dem Liner angeordnet sind, können diese gleich oder verschieden aufgebaut sein, beispielsweise gleiche oder unterschiedliche Materialien und/oder gleiche oder unterschiedliche Dicken aufweisen.

Die Wasserstoffbarriereschicht weist vorteilhafterweise eine Dicke in einem Bereich von 10 bis 1500 µm auf. Insbesondere weist die Wasserstoffbarriereschicht eine Dicke in einem Bereich von 100 bis 1000 µm auf. Dadurch kann diese Wasserstoffbarriereschicht zum einen vor mechanischen Verletzungen beispielsweise durch das Gerät zur Aushärtung des Liners geschützt werden, ist aber andererseits noch dünn genug, um genügend Wärme oder UV-Strahlung für die Aushärtung durchzulassen. Diese Wasserstoffbarriereschicht weist vorteilhafterweise mehrere Lagen auf. Eine dieser Lagen ist beispielsweise eine Monomerbarrierelage. Diese Monomerbarrierelage soll die Diffusion von Reaktivverdünnern wie beispielsweise Styrol von unausgehärtetem Harz verhindern. Diese Monomerbarrierelage ist vorteilhafterweise eine der Lagen der Wasserstoffbarriereschicht, die nicht außen ("außen" meint hier "für den Betrachter sichtbar" und/oder "an die Verankerungsschicht angrenzend") liegt, also im Kern der Wasserstoffbarriereschicht. Die Monomerbarrierelage enthält beispielsweise zu 10 Gew.% bis 40 Gew.% oder alternativ zu 100 Gew.% ein Material ausgewählt aus der Gruppe Polyamid, Ethylen-Vinylalkohol-Copolymer, PBT, PET, halogenierten Polymeren oder Mischungen derselben. Im Übrigen enthält die Monomerbarrierelage vorzugsweise thermoplastische Polymere wie beispielsweise Polyethylen oder Polypropylen. Die Monomerbarrierelage kann beispielsweise eine Folie sein, die aus mehreren Schichten besteht. Beispielsweise kann in der Monomerbarrierelage eine Schicht aus Polyamid oder auch Metall (wie Kupfer) von zwei Schichten aus thermoplastischem Polymer umschlossen sein. Die Monomerbarrierelage weist vorteilhafterweise eine Dicke in einem Bereich von 5 bis 500 µm auf.

Mit der neuen erfindungsgemäßen Monomerbarrierelage in der Wasserstoffbarriereschicht, die vorzugsweise stoff- oder kraftschlüssig mit dem Liner verbunden ist, ist es möglich, mit einem Liner basierten Sanierungsverfahren Wasserstoffleitungen umweltfreundlich zu sanieren. Zudem ist es erstmalig möglich, UV-härtbare Harze und Radikalinitiatoren zu verwenden.

Die Wasserstoffbarriereschicht weist vorteilhafterweise wenigstens eine und vorteilhafterweise zwei außenliegende Lagen ("außen" meint hier "für den Betrachter sichtbar" und/oder "an die Verankerungsschicht angrenzend") aus Polyurethan, Polyethylen oder Polypropylen auf. Diese außen liegende Lage weist vorteilhafterweise eine Dicke in einem Bereich von 10 bis 1000 µm auf. Beispielsweise kann die an die Verankerungsschicht angrenzende außen liegende Lage (beispielsweise als Haftlage) dünner sein als die andere außen liegende Lage, die der Schlauchmitte zugewandt ist (nämlich beispielsweise einer Verschleißlage). Dadurch kann die Wasserstoffbarriereschicht noch besser vor mechanischen Einflüssen schützen.

Die Wasserstoffbarriereschicht ist vorzugsweise wenigstens teilweise partikel- und/oder faserverstärkt, besonders bevorzugt kohlenstofffaserverstärkt (beispielsweise CFRP oder Graphen) und/oder glasfaserverstärkt.

### Ausführungsbeispiel

Für die Herstellung des erfindungsgemäßen imprägnierten einzugsfähigen Faserschlauchs (Liner) wurde im Prinzip ein üblicher Liner wie in DE102014114746A1 oder auch in EP2573442A1 ausführlich beschrieben hergestellt. Anstatt der in EP2573442A1 im Ausführungsbeispiel beschriebenen 300 µm Folie, auf die ein 100 µm dickes Polypropylenvlies aufkaschiert war, und die aus drei gleichdicken Lagen Polyethylen, Polyamid und Polyethylen zu jeweils 100 µm bestand, wurde eine andere Folie verwendet. Es wurde eine Verbundfolie aus einer 50 µm dicken Lage aus Kupferfolie eingesetzt, die auf beiden Seiten mit zwei 100 µm dicken Lagen aus Polyethylen (LDPE) verbunden war. Auf diese Verbundfolie wurde wie in EP2573442A1 beschrieben ein 100 µm dickes Polypropylenvlies aufkaschiert. Der Liner wurde wie üblich in ein passendes Rohr eingebracht und ausgehärtet.

Es wurde ein Test an dem ausgehärteten Liner durchgeführt, der die Permeation von Wasserstoff durch den Liner bestimmt hat. Dazu wurde Wasserstoff mit 2 bar Druck bei Raumtemperatur durch den Liner durchgeleitet, wobei der Liner in einem Autoklav war. Es wurde ein Gaschromatograph verwendet, um etwaigen Wasserstoff außerhalb des Liners in einem Stickstoffstrom zu detektieren. Die Detektionsgrenze des Gaschromatographen betrug für Wasserstoffgas 25 ppmv (parts per million volume). Der Test wurde über 50 Tage lang durchgeführt und es konnte kein Wasserstoff außerhalb des Liners detektiert werden. Die Permeabilität von Wasserstoff wurde mit < 11 × 10⁻⁷ cm³ (STP) cm⁻¹ s⁻¹ bar⁻¹ bei Raumtemperatur und Normalaußendruck festgestellt.

## Patentansprüche

1. Verwendung eines Liners zur Sanierung einer Wasserstoffleitung oder zur Umrüstung einer Leitung für den Transport von Wasserstoff, wobei der Liner wenigstens eine Faserschicht umfasst, die mit einem Harzsystem getränkt ist.

2. Verfahren zum Sanieren von Wasserstoffleitungen oder Umrüsten von Leitungen für den Transport von Wasserstoff, **dadurch gekennzeichnet, dass** man einen Liner in eine Leitung einbringt und dann aushärtet, wobei der Liner wenigstens eine Faserschicht umfasst, die mit einem Harzsystem getränkt ist.

3. Verfahren oder Verwendung gemäß einem der vorhergehenden Ansprüche, **dadurch gekennzeichnet, dass** der Liner eine Wasserstoffbarriereschicht aufweist, wobei die Wasserstoffbarriereschicht wenigstens ein Material ausgewählt aus Polymer, Metall, Oxid, Nitrid, Carbid, Graphen und/oder Mischungen derselben aufweist.

4. Verfahren oder Verwendung gemäß Anspruch 3, **dadurch gekennzeichnet, dass** die Wasserstoffbarriereschicht eine Lage aus Metall aufweist oder aus Metall besteht.

5. Verfahren oder Verwendung gemäß einem der Ansprüche 3 oder 4, **dadurch gekennzeichnet, dass** das Polymer Polyamid, HDPE, LDPE, LLDPE, MDPE, PPS oder eine Mischung derselben ist.

6. Verfahren oder Verwendung gemäß einem der vorhergehenden Ansprüche 3 bis 5, **dadurch gekennzeichnet, dass** die Wasserstoffbarriereschicht mit Fasern oder Partikeln verstärkt ist.

7. Verfahren oder Verwendung gemäß einem der vorhergehenden Ansprüche, **dadurch gekennzeichnet, dass** das Verhältnis von Durchmesser zur Wanddicke des ausgehärteten Liners in einem Bereich von 25 bis 200 liegt.

8. Verfahren oder Verwendung gemäß einem der vorhergehenden Ansprüche, **dadurch gekennzeichnet, dass** der Liner ein Einzugsliner ist.

9. Verfahren oder Verwendung gemäß einem der vorhergehenden Ansprüche, **dadurch gekennzeichnet, dass** die Fasern aus einem oder mehreren Filamenten bestehen und der Durchmesser der Filamente im Median in einem Bereich von 10 bis 300 µm liegt.

10. Verfahren oder Verwendung gemäß einem der vorhergehenden Ansprüche, **dadurch gekennzeichnet, dass** die Leitung bei einem Druck von mehr als 1 bar betrieben wird.
